(19)

Europäisches
Patentamt
European
Patent Office
Office européen
des brevets

(11) **EP 4 286 154 A1**

(12) **EUROPEAN PATENT APPLICATION**
published in accordance with Art. 153(4) EPC

(43) Date of publication:
06.12.2023 Bulletin 2023/49

(21) Application number: 22745768.6

(22) Date of filing: 21.01.2022

(51) International Patent Classification (IPC):
*B32B 27/00* (2006.01)    *B29C 63/02* (2006.01)
*B29C 70/34* (2006.01)    *B32B 5/28* (2006.01)
*B32B 7/022* (2019.01)    *C09J 7/00* (2018.01)

(52) Cooperative Patent Classification (CPC):
**B29C 63/02; B29C 70/34; B32B 5/28; B32B 7/022;
B32B 27/00; C09J 7/00**

(86) International application number:
**PCT/JP2022/002299**

(87) International publication number:
**WO 2022/163547 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.01.2021  JP 2021013342
29.09.2021  JP 2021160127

(71) Applicant: NITTO DENKO CORPORATION
Ibaraki-shi
Osaka 567-8680 (JP)

(72) Inventors:
• **OBAN Ryohei**
  **Ibaraki-shi, Osaka 567-8680 (JP)**
• **SHIMOKAWA Kayo**
  **Ibaraki-shi, Osaka 567-8680 (JP)**
• **ENDO Asuka**
  **Ibaraki-shi, Osaka 567-8680 (JP)**
• **ISHIGURO Shigeki**
  **Ibaraki-shi, Osaka 567-8680 (JP)**

(74) Representative: **Müller-Boré & Partner
Patentanwälte PartG mbB
Friedenheimer Brücke 21
80639 München (DE)**

(54) **SURFACE MODIFICATION SHEET, LAMINATE, SURFACE MODIFICATION MEMBER,
PAINTED OBJECT, SURFACE MODIFICATION MEMBER MANUFACTURING METHOD, AND
PAINTED OBJECT MANUFACTURING METHOD**

(57)    The present invention relates to: a surface-modifying sheet including a release sheet and a surface-modifying layer, wherein the surface-modifying layer has a 160°C storage modulus of $5.0 \times 10^3$ to $1.0 \times 10^7$ Pa and the surface-modifying layer has a surface tension of 38 mN/m or higher; a laminate; a surface-modified member and a coated article both produced using the surface-modifying sheet; a method for producing the surface-modified member; and a method for producing the coated article.

*FIG.1*

**Description**

TECHNICAL FIELD

The present invention relates to a surface-modifying sheet, a laminate, a surface-modified member, a coated article, a method for producing the surface-modified member, and a method for producing the coated article.

BACKGROUND ART

Nowadays, resins which are lightweight and have excellent impact resistance are used in members of transporting machines such as railroad cars, aircrafts, ships, and motor vehicles, electronic appliances, housing equipment, etc., and surfaces thereof have adherends of various materials bonded thereto. Such resin members have coating films having various functions.

In cases when a resin member is bonded to a metal or another resin, it is necessary to attain sufficient adhesion. Conventionally known as adhesives for such use are curable resin compositions based on a rubber epoxy.

However, resin members have a poor affinity for adhesives and sufficient bonding strength is not obtained with conventional adhesives or adhesive sheets. Furthermore, resin members having excellent strength, such as carbon-fiber composite materials (CFRPs), are required to have a high level of bonding strength.

For this reason, it is necessary, for bonding of the resin members, to apply a primer solution or to perform various surface treatments including sandblasting, corona treatment, and plasma treatment as pretreatments before the application of a primer solution.

For example, as a means for obtaining sufficient bonding strength, there is a technique in which an appropriate primer solution is applied in order to modify the surface of a thermoplastic resin member. However, in the case of resins having high solvent resistance (e.g., PPS, PA, and PP), there is a problem in that the primer-solution application cannot attain sufficient bonding strength. In addition, such a surface treatment method necessitates a surface treatment step and a drying step and this results in an increased number of steps and a decrease in production efficiency. The method hence further has a problem concerning cost.

Meanwhile, one means for imparting sufficient bonding strength to a resin member by performing an adhesion-facilitating treatment is a technique in which a surface-modifying sheet is used.

For example, Patent Document 1 describes a surface-modifying sheet capable of imparting sufficient bonding strength to thermoplastic resins.

Furthermore, investigations have been made on a technique (Patent Document 2) for producing a surface-modified member having a smooth surface using a surface-modifying sheet and a technique (Patent Document 3) in which a surface-modified member is inhibited from wrinkling using a release sheet having low linear expansion.

CITATION LIST

PATENT LITERATURE

Patent Document 1: JP2017-128722A
Patent Document 2: JP2019-194016A
Patent Document 3: JP2020-163831A

SUMMARY OF INVENTION

TECHNICAL PROBLEM

However, those techniques of the related art have been found to have a new problem in that in cases when the resin member included in a surface-modified member contains a reinforcing material such as carbon fibers or glass fibers, the use of a surface-modifying sheet sometimes causes a change in appearance with the lapse of time in high-temperature high-humidity environments although effective in improving the adhesion between the resin member and the coating film.

In view of the problem, an object of the present invention is to provide a surface-modifying sheet which can form a surface-modifying layer having excellent bonding strength, makes appearance changing decrease even in high-temperature high-humidity environments, and enables to integrally shape the surface-modifying layer and a resin member when forming a surface modified member. Other objects are to provide a laminate, a surface-modified member, and a coated article which are obtained using the surface-modifying sheet, and to provide a method for producing the surface-modified member and a method for producing the coated article, in which the surface-modifying sheet is used.

SOLUTION TO THE PROBLEM

The present inventors diligently made investigations in order to solve the problem. As a result, they have found that by forming a sheet-shaped surface-modifying layer and regulating the surface-modifying layer so as to have a storage modulus and a surface tension which are in respective specific ranges, this surface-modifying layer has excellent bonding strength, makes appearance changing decrease even in high-temperature high-humidity environments, and enables to integrally shape the surface-modifying layer and a resin member when forming a surface modified member. The present invention has been thus completed.

Means for solving the problem are as follows.

[1] A surface-modifying sheet including a release sheet and a surface-modifying layer,

wherein the surface-modifying layer has a 160°C storage modulus of $5.0 \times 10^3$ to $1.0 \times 10^7$ Pa and
the surface-modifying layer has a surface tension of 38 mN/m or higher.

[2] The surface-modifying sheet according to [1] wherein the surface-modifying layer includes a polymeric component and the polymeric component has a nonpolar unit and a polar unit.

[3] The surface-modifying sheet according to [1] or [2] wherein the surface-modifying layer includes a filler.

[4] The surface-modifying sheet according to any one of [1] to [3] wherein the surface-modifying layer has an average thickness of 0.1 $\mu$m to 2,000 $\mu$m.

[5] A laminate contains the surface-modifying layer of the surface-modifying sheet according to any one of [1] to [4], the surface-modifying layer being laminated to at least a part of a surface of a resin material.

[6] The laminate according to [5] wherein the resin material is a prepreg.

[7] A surface-modified member contains the surface-modifying layer of the surface-modifying sheet according to any one of [1] to [4], the surface-modifying layer being laminated to at least a part of a surface of a resin member.

[8] The surface-modified member according to [7] wherein the resin member includes a heat-curable resin.

[9] The surface-modified member according to [7] wherein the resin member includes a heat-curable epoxy resin.

[10] A coated article including the surface-modified member according to any one of [7] to [9] and a coating film provided to at least a part of the surface-modified member.

[11] The coated article according to [10] wherein the coating film is at least a kind selected from a coating, a printed layer, a vapor-deposited layer, and a plating layer.

[12] A method for producing a surface-modified member using the surface-modifying sheet according to any one of [1] to [4], the method including a laminating step of laminating the surface-modifying layer to a resin member by heat pressing.

[13] The method for producing a surface-modified member according to [12] wherein the resin member includes a heat-curable epoxy resin.

[14] A method for producing a coated article using the surface-modifying sheet according to any one of [1] to [4], the method including

a step of producing a surface-modified member by laminating the surface-modifying layer on a resin member by heat pressing and
a step of forming a coating film on the surface-modified member on a surface-modifying-layer side.

[15] The method for producing a coated article according to [14] wherein the resin member includes a heat-curable epoxy resin.

ADVANTAGEOUS EFFECTS OF INVENTION

The surface-modifying sheet according to an embodiment of the present invention can form a surface-modifying layer having an excellent bonding strength, makes appearance changing decrease even in high-temperature high-humidity environments, and enables to integrally shape the surface-modifying layer and a resin member when forming a surface modified member.

BRIEF DESCRIPTION OF DRAWINGS

FIG. 1 is a schematic cross-sectional view showing one example of a surface-modified member.
FIG. 2 is a schematic cross-sectional view showing one example of a surface-modifying sheet.
FIG. 3 is a schematic cross-sectional view showing a configuration such that a surface-modifying sheet is a laminate of a release sheet and a surface-modifying layer, and that the surface-modifying sheet on a surface-modifying-layer side is placed on at least a part of a surface of a resin material.
FIG. 4 is a schematic cross-sectional view showing one example of a coated article.

DESCRIPTION OF EMBODIMENTS

Embodiments of the present invention are described in detail below.

The surface-modifying sheet according to an embodiment of the present invention includes a release sheet and a surface-modifying layer, and

the surface-modifying layer has a 160°C storage modulus of $5.0 \times 10^3$ to $1.0 \times 10^7$ Pa and
the surface-modifying layer has a surface tension of 38 mN/m or higher.

In the surface-modifying sheet according to the embodiment of the present invention, the surface-modifying layer is sheet-shaped; thus, the surface-modifying layer is not disposed by coating on a surface of a resin member, but can be integrally shaped therewith through a heat treatment while placed on a resin material. Because of this, the occurrence of unevenness due to cissing, etc. can be prevented and a surface-modifying layer can be formed in an even thickness on the surface of the resin member. In cases when a surface-modifying layer is formed on some of surfaces of a resin member, a decrease in yield due to protrusion or the like can be prevented. Furthermore, since the surface-modifying layer has a 160°C storage modulus of $5.0 \times 10^3$ to $1.0 \times 10^7$ Pa, the surface-modifying layer can be inhibited from deforming in high-humidity hot environments. Since the surface-modifying layer has a surface tension of 38 mN/m or higher, the surface-modifying layer can have enhanced activity and have adhesiveness to coating films. Consequently, in a case where a surface-modified member is formed, changing in appearance can be decreased even in high-temperature high-humidity environments and adhesiveness to coating films also can be obtained.

In the case of a surface-modified member constituted using a resin member containing a reinforcing material, e.g., carbon fibers or glass fibers, appearance has sometimes changed in a high-temperature high-humidity environment with the lapse of time. This is presumed due to the following fact: the surface-modifying layer has come to have a reduced modulus due to the high-temperature high-humidity environment and this has allowed some of the reinforcing material to move into the surface-modifying layer.

Since the surface-modifying layer in the surface-modifying sheet according to the embodiment of the present invention has a 160°C storage modulus of $5.0 \times 10^3$ to $1.0 \times 10^7$ Pa and has a surface tension of 38 mN/m or higher, a surface-modified member formed therewith can be inhibited from changing in appearance even when exposed to a high-temperature high-humidity environment, because the surface-modifying layer is inhibited from flowing and the reinforcing material in the resin member is hence prevented from moving to the surface-modifying layer.

[Surface-modifying layer]

In the surface-modifying sheet according to the embodiment of the present invention, the surface-modifying layer has a 160°C storage modulus of $5.0 \times 10^3$ to $1.0 \times 10^7$ Pa and a surface tension of 38 mN/m or higher.

Regulating the 160°C storage modulus of the surface-modifying layer to $5.0 \times 10^3$ Pa or higher has an advantage in reducing the flowability of the surface-modifying layer.

Regulating the 160°C storage modulus of the surface-modifying layer to $1.0 \times 10^7$ Pa or less has an advantage in that the surface-modifying layer can conform to curved surfaces.

The 160°C storage modulus of the surface-modifying layer is preferably $1.0 \times 10^6$ Pa or less, more preferably $5.0 \times 10^5$ Pa or less, still more preferably $1.0 \times 10^5$ Pa or less, and is preferably $1.0 \times 10^4$ Pa or higher, more preferably $3.0 \times 10^4$ Pa or higher, still more preferably $5.0 \times 10^4$ Pa or higher.

In case where the 160°C storage modulus of the surface-modifying layer exceeds $1.0 \times 10^7$ Pa, this surface-modifying layer is higher in storage modulus than the release sheet and has poor conformability to curved surfaces. In case where the 160°C storage modulus thereof is less than $5.0 \times 10^3$ Pa, this surface-modifying layer has impaired thickness evenness or shows enhanced flowability in high-temperature high-humidity environments, resulting in a decrease in appearance attractiveness.

The term "storage modulus" means a storage modulus measured by the following method using a laminated article, as a test sample, in which surface-modifying layers constituting a portion to be examined is stacked in a thickness of 500 $\mu$m. Specifically, the laminated article is cut to produce a test piece having a diameter of 25 mm. A jig having a diameter of 25 mm is used to perform a temperature-dispersion examination at 25 to 300°C with viscoelastometer ARES-G2, manufactured by TA Instruments Inc. This examination was conducted at a heating rate of 5 °C/min and a frequency of 1 Hz. The value of modulus measured at 160°C is taken as the storage modulus.

In the surface-modifying sheet according to the embodiment of the present invention, the surface-modifying layer needs to have a surface tension of 38 mN/m or higher. By regulating the surface tension thereof to 38 mN/m or higher, adhesiveness to coating films is obtained. The surface tension of the surface-modifying layer is preferably 41 mN/m or higher, more preferably 44 mN/m or higher, still more preferably 48 mN/m or higher. There is no particular upper limit on the surface tension of the surface-modifying layer, but the surface tension thereof can be 73 mN/m or less.

The surface tension of the surface-modifying layer can be measured, for example, by a wetting tension test method (JIS K6768). Specifically, the surface tension of the surface-modifying layer can be measured by the method described in the Examples.

The average thickness of the surface-modifying layer is not particularly limited. The average thickness thereof is preferably 0.1 $\mu$m to 2,000 $\mu$m, more preferably 0.5 $\mu$m to 1,000 $\mu$m, still more preferably 1 $\mu$m to 500 $\mu$m, yet still more preferably 1 $\mu$m to 200 $\mu$m, especially preferably 1 $\mu$m to 100 $\mu$m, more especially preferably 3 $\mu$m to 50 $\mu$m, most preferably 5 $\mu$m to 30 $\mu$m.

The thickness of the surface-modifying layer can be determined by measuring the thickness of the surface-modifying sheet with a dial thickness gauge (e.g., Peacock GC-9), removing the surface-modifying layer in the portion where the thickness measurement was made, measuring the thickness of the release sheet in that portion, and taking the difference therebetween as the thickness of the surface-modifying layer.

The average thickness of the surface-modifying layer is an average of values measured on ten points.

The surface-modifying layer (or a material for the surface-modifying layer) preferably includes a polymeric component, and it is more preferable that the polymeric component has a nonpolar unit and a polar unit including a polar group. The content of the polymeric component in the surface-modifying layer is preferably 50 to 100 mass%, more preferably 70 to 100 mass%, still more preferably 90 to 100 mass%, especially preferably 92 to 100 mass%, most preferably 95 to 100 mass%.

Examples of the nonpolar unit in the polymeric component include a polyethylene unit, a polypropylene unit, and a polystyrene unit. The nonpolar units may be of one kind only or may be of two or more kinds thereof.

Examples of the polar unit including a polar group in the polymeric component include an epoxy group, a carboxyl group, a nitrile group, an amide group, an ester group, a hydroxyl group, an acid anhydride, and a silanol group. Examples of polar units having such polar groups include a glycidyl methacrylate unit, a vinyl acetate unit, an acrylonitrile unit, an amide unit, a (meth)acrylic acid ester unit, a hydroxyethyl (meth)acrylate unit, and a maleic anhydride unit. The polar units may be of one kind only or may be of two or more kinds thereof.

The polymeric component which the surface-modifying layer (or a material for the surface-modifying layer) can include may be at least one polymer selected from among a methoxymethyl-group-containing polymer, a hydroxyl-group-containing polymer, a carboxyl-group-containing polymer, an amino-group-containing polymer, and an amide-group-containing polymer.

Such polymeric components which the surface-modifying layer (or a material for the surface-modifying layer) can include are preferably addition type hardeners, more preferably addition type hardeners which react with an epoxy group.

As the methoxymethyl-group-containing polymer, any desired appropriate polymer containing a methoxymethyl group ($-CH_2-OCH_3$) can be employed unless this polymer lessens the effects of the invention. Examples of such methoxymethyl-group-containing polymers include methoxymethyl-group-containing polyamide resins.

As the methoxymethyl-group-containing polymer, commercial products may be employed. Examples of such commercial products include "Fine Resin" (registered trademark) series (manufactured by Namariichi Co., Ltd.).

One kind of the methoxymethyl-group-containing polymer may be employed, or two or more kinds thereof may be employed.

From the standpoint of enhancing the effects of the invention, the methoxymethyl-group-containing polymer has a weight-average molecular weight (Mw) of preferably 1,000 to 1,000,000, more preferably 3,000 to 500,000, still more preferably 5,000 to 100,000, especially preferably 7,000 to 70,000, most preferably 10,000 to 50,000.

As the hydroxyl-group-containing polymer, any desired appropriate polymer containing a hydroxyl group (-OH) can be employed unless this polymer lessens the effects of the invention. Examples of such hydroxyl-group-containing polymers include hydroxyl-group-containing acrylic polymers.

As the hydroxyl-group-containing polymer, commercial products may be employed. Examples of such commercial products include "ARUFON (registered trademark) UH-2000 series" (manufactured by Toagosei Co., Ltd.).

One kind of the hydroxyl-group-containing polymer may be employed, or two or more kinds thereof may be employed.

From the standpoint of enhancing the effects of the invention, the hydroxyl-group-containing polymer has a weight-average molecular weight (Mw) of preferably 500 to 1,000,000, more preferably 700 to 500,000, still more preferably 1,000 to 100,000, especially preferably 1,500 to 70,000, most preferably 2,000 to 50,000.

As the carboxyl-group-containing polymer, any desired appropriate polymer containing a carboxyl group (-COOH) can be employed unless this polymer lessens the effects of the invention. Examples of such carboxyl-group-containing polymers include carboxyl-group-containing acrylic polymers.

As the carboxyl-group-containing polymer, commercial products may be employed. Examples of such commercial products include "ARUFON (registered trademark) UC-3000 series" and "ARUFON (registered trademark) UC-3510 series" (manufactured by Toagosei Co., Ltd.).

One kind of the carboxyl-group-containing polymer may be employed, or two or more of these may be employed.

From the standpoint of enhancing the effects of the invention, the carboxyl-group-containing polymer has a weight-average molecular weight (Mw) of preferably 500 to 1,000,000, more preferably 700 to 500,000, still more preferably 1,000 to 100,000, especially preferably 1,500 to 70,000, most preferably 2,000 to 50,000. The values of weight-average molecular weight (Mw) used herein are molecular weights in terms of polystyrene measured by GPC.

As the amino-group-containing polymer, any desired appropriate polymer containing an amino group (-NH$_2$) can be employed unless this polymer lessens the effects of the invention.

As the amino-group-containing polymer, commercial products may be employed.

One kind of the amino-group-containing polymer may be employed, or two or more kinds thereof may be employed.

The surface-modifying layer (or a material for the surface-modifying layer) may contain at least one compound selected from among tertiary-amine-containing compounds and strong acids.

Such tertiary-amine-containing compounds and strong acids which the surface-modifying layer (or a material for the surface-modifying layer) can contain are preferably catalyst type hardeners, more preferably catalyst type hardeners which react with an epoxy group.

As the tertiary-amine-containing compounds, any desired appropriate compounds containing a tertiary amine can be employed unless the compounds lessen the effects of the invention. Examples of such tertiary-amine-containing compounds include imidazole derivatives and polyethyleneimine.

As the tertiary-amine-containing compounds, commercial products may be employed. Examples of such commercial products of imidazole derivatives include "Curesol" series (imidazole-based epoxy resin hardeners manufactured by Shikoku Chemicals Corp.). Examples of such commercial products of polyethyleneimine include "Epomine" (registered trademark) series (manufactured by Nippon Shokubai Co., Ltd.).

One kind of the tertiary-amine-containing compound may be employed, or two or more kinds thereof may be employed.

As the strong acids, any desired appropriate strong acids can be employed unless the strong acids lessen the effects of the invention. Examples of such strong acids include trifluoroborane, ionic liquids, and Nafion.

Examples of the ionic liquids include BF$_3$-C$_2$H$_5$NH$_2$ and HMI-PF$_6$.

As the strong acids, commercial products may be employed.

One kind of the strong acid may be employed, or two or more kinds thereof may be employed.

As the amide-group-containing polymer, any desired appropriate polymer containing an amide group (-CO-NH$_2$) can be employed unless this polymer lessens the effects of the invention. Examples of such amide-group-containing polymers include copolyamide resins.

As the amide-group-containing polymer, commercial products may be employed. Examples of such commercial products include "Amilan CM8000" (manufactured by Toray Industries, Inc.).

One kind of the amide-group-containing polymer may be employed, or two or more kinds thereof may be employed.

From the standpoint of enhancing the effects of the invention, the amide-group-containing polymer has a weight-average molecular weight (Mw) of preferably 1,000 to 1,000,000, more preferably 3,000 to 500,000, still more preferably 5,000 to 200,000, especially preferably 10,000 to 100,000, most preferably 20,000 to 70,000.

The surface-modifying layer (which may be a material for the surface-modifying layer) may further contain a crosslinking agent as an additive.

The crosslinking agent contained in the surface-modifying layer can be in any of: the form of the crosslinking agent which has undergone a crosslinking reaction, the form of the crosslinking agent which has not undergone any crosslinking reaction, the form of the crosslinking agent which has partly undergone a crosslinking reaction, a form which is intermediate between these or a combination of these, etc.

In cases when the surface-modifying layer contains a crosslinking agent, the polymer comes to have a three-dimensional network structure to make it easy to regulate the storage modulus of the surface-modifying layer to a value within the desired range. Hence, the effect of inhibiting appearance change is easy to obtain even in high-temperature high-humidity environments.

Examples of the crosslinking agent include isocyanate-based crosslinking agents, epoxy-based crosslinking agents, amine-based crosslinking agents, thiol-based crosslinking agents, unsaturated-compound crosslinking agents, oxazoline-based crosslinking agents, aziridine-based crosslinking agents, carbodiimide-based crosslinking agents, metal-chelate-based crosslinking agents, and peroxide-based crosslinking agents. Preferred are epoxy-based crosslinking agents and peroxide-based crosslinking agents.

Only one kind of such crosslinking agents may be contained in the surface-modifying layer, or two or more of these may be contained.

The content of the crosslinking agent which can be contained in the surface-modifying layer is preferably 0.01 part by mass or higher, more preferably 0.05 parts by mass or higher, still more preferably 0.1 part by mass or higher, per 100 parts by mass of the polymer from the standpoint of heightening the modulus. Meanwhile, from the standpoint of imparting a high surface tension, the content thereof is preferably 20 parts by mass or less, more preferably 10 parts by mass or less, still more preferably 5 parts by mass or less.

The kinds, combinations, contents, etc. of crosslinking agents which can be contained in the surface-modifying layer can be appropriately set in accordance with intended uses and desired properties.

For example, in the case where the crosslinking agent is a peroxide-based crosslinking agent, the content thereof per 100 parts by mass of the polymer is preferably 0.01 part by mass or higher, more preferably 0.05 parts by mass or higher, still more preferably 0.1 part by mass or higher. From the standpoint of imparting a high surface tension, the content thereof is preferably 5 parts by mass or less, more preferably 3 parts by mass or less, still more preferably 1 part by mass or less.

The surface-modifying layer (or a material for the surface-modifying layer) may further contain a filler, e.g., fine particles, as an additive. That is, the surface-modifying layer according to the embodiment of the present invention may include a filler.

The filler may be a non-particulate filler, e.g., a fibrous, platy, acicular, or indefinite-shape filler, or may be fine particles or secondary particles (aggregates) of fine particles.

In cases when the surface-modifying layer contains a filler, e.g., fine particles, a high modulus can be imparted and this makes it easy to regulate the storage modulus of the surface-modifying layer to a value within the desired range. Hence, the effect of inhibiting appearance change is easy to obtain even in high-temperature high-humidity environments.

The fine particles may be either inorganic fine particles or organic fine particles.

Examples of the inorganic fine particles include fine silicon oxide particles (e.g., fumed silica, colloidal silica, precipitated silica, silica gel, silica aerogel, and quartz glass), fine titanium oxide particles, fine aluminum oxide particles, fine zinc oxide particles, fine tin oxide particles, fine calcium carbonate particles, and fine barium sulfate particles.

Examples of the organic fine particles include poly(methyl methacrylate) resin powders (fine PMMA particles), silicone resin powders, polystyrene resin powders, polycarbonate resin powders, acrylic/styrene resin powders, benzoguanamine resin powders, melamine resin powders, polyolefin resin powders, polyester resin powders, polyamide resin powders, polyimide resin powders, and polyethylene fluoride) resin powders.

From the standpoint of heat resistance, the fine particles are preferably inorganic fine particles. From the standpoint of the dispersion stability of coating fluids, the fine particles are more preferably fine silicon oxide particles.

As the fibrous filler, use can be made of various synthetic fibers and natural fibers. Examples of the synthetic fibers include glass fibers, carbon fibers, e.g., carbon nanofibers, graphite fibers, steel fibers, potassium titanate, aramid fibers, vinylon fibers, and polyester fibers. Examples of the natural fibers include wood fibers such as cellulose nanofibers, kenaf fibers, hemp fibers, cotton, and bamboo fibers.

As the platy filler, use can be made of mineral and synthetic fillers such as clay, mica, talc, kaolin, smectite, calcium sulfate, metal hydroxides, e.g., aluminum hydroxide, and glass flakes.

Fillers of various indefinite shapes, e.g., carbon black, may also be used. Any of the compounds mentioned above as fine particles may also be used when the compound can have a non-particulate shape.

The filler, e.g., fine particles, to be used may be one which has undergone a surface treatment (modification) according to need.

Preferred of those fillers are fillers containing polar groups.

It is thought that in cases when the surface-modifying layer includes a filler containing polar groups, the filler containing polar groups and the polymeric component interact with each other at the boundary therebetween to make the surface-modifying layer less apt to break and the surface-modifying sheet have a higher modulus.

The surface of the filler containing polar groups may be an untreated surface of may have undergone a surface treatment. It is preferred to use a filler containing polar groups which has surface functional groups of at least one kind selected from the group consisting of silanol, hydroxyl, amino, mercapto, carboxyl, isocyanate, and epoxy groups.

Examples of the surface treatment include a modification of the filler surface with polydimethylsiloxane (PDMS), etc.

Examples of the filler containing polar groups include silica particles such as fumed silica, colloidal silica, precipitated silica, silica gel, silica aerogel, quartz glass, and glass fibers. Preferred of these are fumed silica and colloidal silica, from the standpoint of improving the elongation at break.

The filler is not particularly limited in average primary-particle diameter. The average primary-particle diameter of the filler is usually appropriately 10 $\mu$m or less, preferably 1 $\mu$m or less, and may be 0.1 $\mu$m or less. In cases when the average primary-particle diameter of the filler is 10 $\mu$m or less, the surface-modifying layer is excellent in terms of transparency and mechanical strength. Meanwhile, the average primary-particle diameter of the filler may be, for example, 5 nm or larger, 10 nm or larger, or 15 nm or larger. That the average primary-particle diameter thereof is not too small can be advantageous from the standpoint of the handleability and dispersibility of the filler.

From the standpoint of the smoothness of the surface-modifying layer, the average primary-particle diameter of the filler is preferably smaller than the thickness of the surface-modifying layer.

An average primary-particle diameter of a filler can be determined by methods well known to a person skilled in the art. For example, the average primary-particle diameter can be determined with a scanning electron microscope (SEM) or a transmission electron microscope (TEM) or by dynamic light scattering (DLS), static light scattering, etc. Preferably, primary-particle diameters are measured by an optical evaluation with a transmission electron microscope and an average for a hundred particles can be adopted.

The surface-modifying layer may contain only one kind of the filler or contain two or more kind of the fillers.

The content of the filler which can be contained in the surface-modifying layer is preferably 0.1 part by mass or higher, more preferably 1 part by mass or higher, still more preferably 5 parts by mass or higher, per 100 parts by mass of the polymer from the standpoint of heightening the modulus. Meanwhile, from the standpoint of film-forming property, the content thereof is preferably 200 parts by mass or less, more preferably 150 parts by mass or less, still more preferably 120 parts by mass or less, most preferably 100 parts by mass or less.

The kinds, combinations, contents, etc. of fillers which can be contained in the surface-modifying layer can be appropriately set in accordance with intended uses and desired properties.

[Release sheet]

The release sheet is not particularly limited. However, the release sheet preferably has a heat resistance of 100°C or higher and preferably has a 100°C tensile modulus of 1 GPa or less. Although the release sheet may be either a non-silicone resin sheet or a silicone resin sheet, it is preferably a non-silicone resin sheet. Examples thereof include fluororesin sheet films (Nitoflon, manufactured by Nitto Denko Corp.), polyester-based resin sheets, polymethylpentene-based resin sheets (Opulent (registered trademark), manufactured by Mitsui Chemical Tohcello, Inc.), polystyrene-based resin sheets (Oidys (registered trademark), manufactured by Kurabo Industries Ltd.), polyamide-based resin sheets, and polyolefin-based resin sheets.

More specific examples of release sheets usable in the surface-modifying sheet include unstretched polyamide-6, unstretched polyamide-66, biaxially stretched polyamide-6, biaxially stretched polyamide-66, biaxially stretched polypropylene, biaxially stretched polyethylene terephthalate), biaxially stretched poly(butylene terephthalate), easy-to-shape poly(ethylene terephthalate), cast-shaped polytetrafluoroethylene, an unstretched extrusion-shaped tetrafluoroethylene/ethylene copolymer (ETFE), an unstretched extrusion-shaped tetrafluoroethylene/perfluoroalkoxyethylene copolymer (PFA), an unstretched extrusion-shaped tetrafluoroethylene/hexafluoropropylene copolymer (FEP), and laminated articles including these as main layers.

The thickness of the release sheet is preferably 1-1,000 $\mu$m, more preferably 10-200 $\mu$m, still more preferably 15-100 $\mu$m, especially preferably 20-50 $\mu$m, from the standpoint of conformability to shapes.

According to need, the surface of the release sheet which is to face the surface-modifying layer or both surfaces of the release sheet may be subjected to a release treatment with a suitable releasing agent, e.g., a silicone.

[Production of surface-modifying sheet]

The surface-modifying sheet can be produced by any desired appropriate method. Examples thereof include: a method in which a release sheet is dipped in a solution (surface-modifying composition) including a solvent and a material for a surface-modifying layer and thereafter it is dried according to need; a method in which a solution including a solvent and a material for a surface-modifying layer is applied to a surface of a release sheet with a brush and thereafter it is dried according to need; a method in which a solution including a solvent and a material for a surface-modifying layer is applied to a surface of a release sheet with any of various coaters and it is thereafter dried according to need; and a method in which a solution including a solvent and a material for a surface-modifying layer is applied to a surface of a release sheet by spraying and it is thereafter dried according to need.

In cases when a surface-modifying layer having a large thickness, e.g., 60 $\mu$m or larger, is to be produced, this surface-modifying layer can be produced by obtaining a surface-modifying sheet having a thin surface-modifying layer (about 10-$\mu$m thick) by any of those methods, superposing the surface-modifying layer of another surface-modifying sheet produced in the same manner on the surface-modifying layer of that surface-modifying sheet, laminating the superposed surface-modifying layer by heating, etc., and repeating such laminating of a surface-modifying layer until the desired thickness is reached.

Examples of the surface-modifying composition include a solution obtained by dissolving a material for the surface-modifying layer in a solvent.

Examples of the solvent include: water; alcohols such as methanol, ethanol, and isopropyl alcohol (IPA); ketones such as methyl ethyl ketone; esters; aliphatic, alicyclic, and aromatic hydrocarbons; halogenated hydrocarbons; amides such as dimethylformamide; sulfoxides such as dimethyl sulfoxide; and ethers such as dimethyl ether and tetrahydrofuran. Preferred from the standpoint of inhibiting production of gelled substance is ethanol or a solvent mixed with ethanol, isopropyl alcohol, and water. Only one kind of the solvent may be used, or two or more of the solvents may be used.

The solid concentration of the surface-modifying composition can be suitably set in accordance with intended uses. From the standpoint of the thickness accuracy of the surface-modifying layer, the solid concentration thereof in terms of mass proportion is preferably 1-40 mass%, more preferably 10-35 mass%, still more preferably 15-30 mass%.

The surface-modifying composition may contain various additives such as pH regulators, crosslinking agents, viscosity regulators (e.g., thickeners), leveling agents, release regulators, plasticizers, softeners, fillers, colorants (e.g., pigments and dyes), surfactants, antistatic agents, antiseptics, aging inhibitors, ultraviolet absorbers, antioxidants, and light stabilizers according to need.

For example, addition of a colorant renders the surface-modifying layer visible and this makes it easy to assess whether the surface of a resin member is modified or not. There is hence a merit in process control.

Examples of the colorant include dyes and pigments. The colorant may be a fluorescent material which can be visually recognized in black light.

[Laminate and surface-modified prepreg]

The laminate according to the embodiment of the present invention is a laminate in which the surface-modifying layer of the surface-modifying sheet is laminated to at least a part of a surface of a resin material.

The resin material may be a prepreg.

The surface-modified prepreg according to the embodiment of the present invention is a surface-modified prepreg in which the surface-modifying layer of the surface-modifying sheet is laminated to at least a part of a surface of a resin material.

The laminate according to the embodiment of the present invention, which is the resin material having the surface-modifying layer, can be produced by laminating the surface-modifying sheet on the surface-modifying-layer side to at least a part of a surface of an unshaped resin material.

The resin included in the resin material may be either a thermoplastic resin or a heat-curable resin.

Examples of the thermoplastic resin include PP (polypropylene), PA (polyamides), PPE (poly(phenylene ether)s), PPS (poly(phenylene sulfide)), PET (poly(ethylene terephthalate)), PBT (poly(butylene terephthalate)), POM (polyacetals), PEEK (polyetheretherketones), PC (polycarbonates), PES (poly(ether sulfide)s), and EP (epoxies). Examples of thermoplastic resins, among these, which enable the effects of the present invention to be advantageously exhibited include PPS (poly(phenylene sulfide)s), PA (polyamides), PES (poly(ether sulfide)s), and EP (epoxies).

As the thermoplastic resin, a fiber-reinforced thermoplastic resin (FRTR) can be employed.

Examples of the fiber-reinforced thermoplastic resin (FRTR) include carbon-fiber-reinforced thermoplastic resins (CFRTP) and glass-fiber-reinforced thermoplastic resins (GFRTP).

Examples of the carbon-fiber-reinforced thermoplastic resins (CFRTP) include carbon-fiber-reinforced PPS-based thermoplastic resins, carbon-fiber-reinforced PA-based thermoplastic resins, carbon-fiber-reinforced PES-based thermoplastic resins, carbon-fiber-reinforced EP-based thermoplastic resins, and carbon-fiber-reinforced PP-based thermoplastic resins.

Examples of the glass-fiber-reinforced thermoplastic resins (GFRTP) include glass-fiber-reinforced PPS-based thermoplastic resins, glass-fiber-reinforced PA-based thermoplastic resins, and glass-fiber-reinforced PP-based thermoplastic resins.

Examples of the heat-curable resin include unsaturated polyester resins, vinyl ester resins, epoxy resins, melamine resins, phenolic resins, urethane resins, polyisocyanate resins, polyisocyanurate resins, and polyimide resins.

Examples of the shape of the resin material include a plate shape having flat surfaces, a plate shape having curved surfaces, a sheet shape, and a film shape.

The thickness of the resin material is, for example, 0.001-10 mm.

The expression "at least a part of a surface of a resin material" means at least a part of all the surfaces of the resin material. For example, in the case where the resin material has a plate shape, sheet shape, or film shape, that expression means, for example, some of at least one surface thereof or all of at least one surface thereof.

With respect to the surface-modifying sheet and the surface-modifying layer, the explanations given above can be used as such.

The term "prepreg" means a material obtained by impregnating a reinforcing material, e.g., carbon fibers or glass fibers, with a resin containing additives, e.g., a hardener, and heating or drying the impregnated reinforcing material to a semi-cured state.

[Surface-modified member]

The surface-modified member according to the embodiment of the present invention is one in which the surface-modifying layer of the surface-modifying sheet is laminated to at least a part of a surface of a resin member. The surface-modified member according to the embodiment of the present invention is obtained by shaping a resin material having the surface-modifying layer attached thereto and includes a mixture layer that the resin member and the surface-modifying layer are mixed, between the resin member and the surface-modifying layer.

In this description, the term "shaping" means the act of processing a material into a given shape regardless of whether a mold is used or not, while the term "molding" means the act of processing a material into a given shape using a mold.

With respect to the surface-modifying sheet, surface-modifying layer, and resin material, the explanations given above can be used as such. The resin member can be obtained by shaping a resin material.

The resin included in the resin member may be either a heat-curable resin or a thermoplastic resin. The resin is preferably a heat-curable resin, especially preferably a heat-curable epoxy resin.

The mixture layer is a layer in which the resin member and the surface-modifying layer are mixed. For example, the mixture layer is a mixed-portion layer obtained by disposing the surface-modifying layer on at least a part of a surface of a resin material, followed by heating and shaping so that interface between the surface-modifying layer and resin member is welded and mixed, or chemical bonded by melt-contacting. The formation of the mixture layer improves the strength of bonding between the resin member and the surface-modifying layer. In the mixture layer, the resin included in the resin member has preferably been bonded, through a chemical reaction, e.g., covalent bonding, to the polymeric component included in the surface-modifying layer. As a result of the chemical reaction, e.g., covalent bonding, the boundary between the resin member and the surface-modifying layer disappears and the resin member is united with the surface-modifying layer. Hence, further improved bonding strength is obtained.

The thickness of the mixture layer can be suitably decided in accordance with conditions for the heating and shaping and with the kinds of the resin member and surface-modifying layer. The thickness of the mixture layer is preferably 1.5 nm or larger, more preferably 2.0 nm or larger.

The heating and shaping may be conducted simultaneously with the lamination of the resin material and the surface-modifying layer or may be conducted after the surface-modifying sheet is laminated on the resin material.

By performing a surface treatment of a resin member by such method, sufficient bonding strength can be imparted to the resin member and a surface-modified member can be highly efficiently produced at low cost. A method for producing the surface-modified member can be also a method for treating a surface of a resin member (surface-treatment method for a resin member).

<Method for producing surface-modified member>

The method for producing a surface-modified member according to the embodiment of the present invention is not particularly limited. For example, the surface-modifying sheet, which is a laminate including a release sheet and a surface-modifying layer, is placed on at least a part of a surface of a resin material so that the surface-modifying layer faces the resin material, and the resin material and the surface-modifying layer are heated and shaped. Thus, a surface-modified member can be produced.

The heating and shaping causes the polymeric component included in the surface-modifying layer to melt-mix with the resin included in the resin material or to react and chemically combine with the resin. Thus, interface between the surface-modifying layer and resin material is welded and mixed, or chemical bonded by melt-contacting, thereby forming a surface-modified member.

The heating and shaping may be conducted simultaneously with the placement of the surface-modifying sheet or may be conducted after the surface-modifying sheet is placed.

By performing a surface treatment of a resin member by such method, sufficient bonding strength can be imparted to the resin member and a surface-modified member can be highly efficiently produced at low cost. A method for producing the surface-modified member can be also a method for treating a surface of a resin member (surface-treatment method for a resin member).

With respect to the resin member, surface-modifying sheet, release sheet, and surface-modifying layer, the explanations given above can be used as such.

The expression "at least a part of a surface of a resin member" means at least a part of all the surfaces of the resin member. For example, in the case where the resin member has a plate shape, sheet shape, or film shape, that expression means, for example, some of at least one surface thereof or all of at least one surface thereof.

In producing a surface-modified member, in cases when the resin included in the resin member is a thermoplastic resin, it is preferred to dispose the surface-modifying layer on at least a part of a surface of the thermoplastic resin and conduct heat welding at a temperature of $(T_1-50)°C$ or higher, where $T_1$ (°C) is the melting point of the thermoplastic resin. The temperature for the heat welding is preferably $(T_1-50)°C$ to $(T_1+150)°C$, more preferably $(T_1-25)°C$ to $(T_1+100)°C$, still more preferably $(T_1-10)°C$ to $(T_1+75)°C$, especially preferably $(T_1)°C$ to $(T_1+50)°C$. By performing a surface treatment of the resin member by such method at a heat-shaping temperature, i.e., shaping temperature, within that range, boundary portions of the surface-modifying layer and thermoplastic resin member are brought into contact with each other in a molten state, resulting in welding and mixing. Hence, sufficient bonding strength can be imparted to the thermoplastic resin member. This impartation can be attained with high production efficiency and at low cost.

In the case of using a thermoplastic resin as the resin included in the resin member, after at least a part of a surface of the thermoplastic resin member is brought into a molten state, the surface-modifying layer may be disposed on the molten-state surface of the thermoplastic resin member. By disposing the surface-modifying layer on the molten-state surface of the thermoplastic resin member, the surface-modifying layer is welded and mixed due to the heat of the surface of the thermoplastic resin member and sufficient bonding strength can be imparted to the thermoplastic resin member.

In producing a surface-modified member, in cases when the resin included in the resin member is a heat-curable resin, it is preferred to dispose the surface-modifying layer on at least a part of a surface of the heat-curable resin and conduct heating and shaping at a temperature of $(T_2-50)°C$ or higher, where $T_2$ (°C) is a curing temperature of the heat-curable resin. The curing temperature is a peak temperature in an exotherm curve determined by DSC. The heat-shaping temperature is preferably $(T_250)°C$ to $(T_2+50)°C$, more preferably $(T_240)°C$ to $(T_2+40)°C$, still more preferably $(T_2-30)°C$ to $(T_2+30)°C$, especially preferably $(T_2-20)°C$ to $(T_2+20)°C$.

By performing a surface treatment of the resin member by such method at a heat-shaping temperature within that range, boundary portions of the surface-modifying layer and resin member are brought into contact with each other in a molten state, resulting in welding and mixing, or chemical bonding. Hence, sufficient bonding strength can be imparted to the resin member. This impartation can be attained with high production efficiency and at low cost.

Use can be made of a method in which at least a part of a surface of the resin member is brought into a molten state or softened state before the surface-modifying layer is disposed on the molten-state or softened-state surface of the resin member. By thus disposing the surface-modifying layer on the molten-state or softened-state surface of the resin member, the surface-modifying layer is welded and mixed or chemically bonded due to the heat of the surface of the resin member and sufficient bonding strength can be imparted to the resin member.

The term "molten state" means that at least a part of the surface of the resin member is in a molten state, and this state is preferably attained by heating the resin member to a temperature of its melting point or more.

The term "softened state" means that at least a part of the surface of the resin member is in a softened state, and this state is preferably attained by heating the resin member to a temperature of its softening point or more.

The "chemical bonding" can be attained when chemical covalent bonds are formed between the materials of the resin member and the surface-modifying layer.

Examples of methods for the heating and shaping include oven heating, infrared heating, high-frequency heating, and heat pressing. The heating and shaping is conducted preferably by resin shaping, more preferably by heat pressing (press shaping).

The period of the heating and shaping is preferably 1 second to 2 hours.

The method for producing a surface-modified member according to the embodiment of the present invention is a method for producing a surface-modified member using the surface-modifying sheet and may include a laminating step of laminating the surface-modifying layer to a resin member by heat pressing. Here, the resin included in the resin member may be either a heat-curable resin or a thermoplastic resin, and is preferably a heat-curable resin, especially preferably a heat-curable epoxy resin.

In one mode of the heat pressing, for example, the surface-modifying sheet is placed on at least a part of a surface of a resin member in a shaping machine (e.g., a press) so that the surface-modifying layer of the surface-modifying sheet faces the resin member, and the resin member and the surface-modifying sheet are subjected to shaping accompanied with heating (e.g., integral shaping by heat pressing). In this mode, since a surface treatment of the resin member can be conducted simultaneously with shaping of the resin member, it is possible to provide high production efficiency and low cost. The shaping of the resin member may be injection shaping, SMC shaping, BMC shaping, internal-pressure shaping, or autoclave shaping.

In the injection shaping, use can be made of an injection molding machine equipped with a movable mold half and a fixed mold half. For example, the surface-modifying sheet is placed on a recessed portion of the cavity of the movable mold half so that the release sheet faces the recessed portion, and the movable mold half and the fixed fold half are clamped. Subsequently, a molten resin is injected into the cavity.

The resin is then cooled and solidified in the mold before the movable mold half is separated from the fixed mold half. Thus, a surface-modified member is obtained in which the surface-modifying sheet has been united with the resin member.

By peeling the release sheet from the surface-modified member, a surface-modified member including the surface-modifying layer provided to a surface thereof is obtained. The peeling of the release sheet is not particularly limited, and the release sheet may be, for example, peeled off by hand or peeled off using a peeling apparatus therefor.

After the surface-modifying sheet on the surface-modifying-layer side is placed on at least a part of a surface of the resin member, followed by heating and shaping, the release sheet is preferably removed, the surface-modifying sheet being the laminate of the release sheet and the surface-modifying layer. By removing the release sheet, the surface-modifying layer is transferred to the surface of the resin member, and the surface-modified member (sometimes called a multilayer member, which includes the resin member and the surface-modifying layer) is obtained.

As stated above, the surface-modified member preferably includes a mixture layer where the resin member and the surface-modifying layer are mixed, between the resin member and the surface-modifying layer.

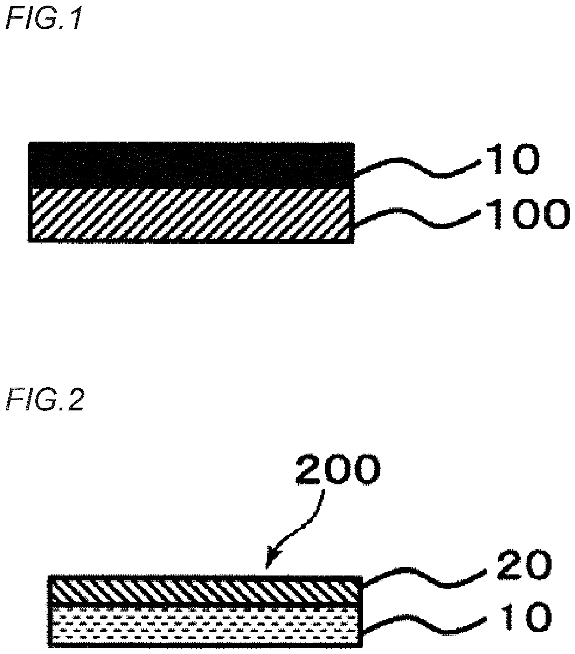

By the production method described above, a surface-modifying layer 10 is disposed on a surface of a resin member 100, thereby obtaining a surface-modified member as shown in FIG. 1. In FIG. 1, the surface-modifying layer 10 is laminated to the surface of the resin member 100. Preferably, however, the surface-modified member includes a mixture layer (not shown) that the resin member and the surface-modifying layer are mixed, between the resin member 100 and the surface-modifying layer 10.

The surface-modifying sheet, which is the laminate of the release sheet and the surface-modifying layer, is a surface-modifying sheet 200 which is a laminate of a release sheet 20 and a surface-modifying layer 10, as shown in FIG. 2.

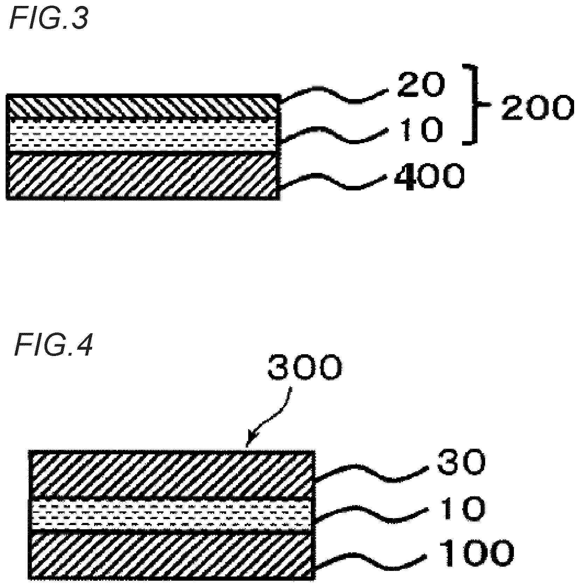

In the method for producing the surface-modified member according to the embodiment of the present invention, the configuration such that the surface-modifying sheet is the laminate of the release sheet and the surface-modifying layer, and that the surface-modifying sheet on the surface-modifying-layer side is placed on at least a part of a surface of the resin member is the following one: as shown in FIG. 3, the surface-modifying sheet 200 is placed on the surface of a resin material 400 such that the surface-modifying sheet 200 on the surface-modifying-layer 10 side faces the surface of the resin material 400.

[Coated article]

The coated article according to the embodiment of the present invention is one including the surface-modified member and a coating film provided to at least a part of the surface-modified member. Preferably, the coating film has been provided to at least a part of the surface thereof on the surface-modifying-layer side. The coating film may be at least one film selected from among a coating, a printed layer, a vapor-deposited layer, and a plating layer.

As an example of the coated article according to the embodiment of the present invention, FIG. 4 shows a coated article 300 including: a surface-modified member in which a surface-modifying layer 10 is disposed on a surface of a resin member 100; and a coating film 30 provided to the surface of the surface-modified member on the surface-modifying-layer side.

Since the surface-modifying layer is not formed by coating to a surface of a member but is formed by using the sheet-shaped surface-modifying sheet, the occurrence of unevenness due to cissing, etc. can be prevented. Because of this, the surface-modifying layer can be formed in an even thickness on the surface of the resin member and a coating film can be coated and provided thereon in an even film thickness. Furthermore, in cases when a surface-modifying layer was disposed on the surface of the resin member in a molten-state or softened-state, the surface-modifying layer has undergone welding and mixing, or chemical bonding due to the heat of the surface of the resin member and the strength of bonding between the surface-modifying layer and the resin member is high; hence, a coating film having excellent adhesion can be formed. Moreover, since the surface-modifying layer and the resin member can be integrally shaped in forming the coated article, there is no need of performing a treatment for removing a release agent, such as a cleaning step with an organic solvent or a polishing step, before a coating film is formed, which can bring excellent safety and mitigate environmental burden and working burden.

The coating film is not particularly limited. Examples thereof include various coating films including epoxy-based, polyester/melamine-based, alkyd/melamine-based, acrylic/melamine-based, acrylic/urethane-based, and acrylic/polyacidic-hardener-based coating films.

The thickness of the coating film is not particularly limited, and may be 1 to 1,000 $\mu$m and is more preferably 3 to 300 $\mu$m, still more preferably 5 to 100 $\mu$m, especially preferably 10 to 50 $\mu$m.

Coating methods for forming the coating film are not particularly limited, and use can be made of common methods including brushing, roller coating, spray coating, and coating by various coaters. The amount in which the coating fluid is to be applied is not particularly limited. The time period, temperature, etc. in heating the coating film can be suitably decided in accordance with the coating fluid to be used, application amount, etc.

[Method for producing coated article according to first embodiment]

A method for producing a coated article according to a first embodiment of the present invention is a method for producing a coated article using the surface-modifying sheet according to the embodiment of the present invention, and includes: a step in which the surface-modifying layer is laminated to a resin member by heat pressing to form a surface-modified member; and a step in which a coating film is formed on the surface-modified member on the side where the surface-modifying layer is present.

The expression "at least a part of a surface of a resin member" means at least a part of all the surfaces of the resin member. For example, in the case where the resin member has a plate shape, sheet shape, or film shape, that expression means, for example, some of at least one surface thereof or all of at least one surface thereof.

The resin included in the resin member may be either a heat-curable resin or a thermoplastic resin, and is preferably a heat-curable resin, especially a heat-curable epoxy resin.

Examples of the heat-curable resin include vinyl ester resins, unsaturated polyester resins, epoxy resins, melamine resins, phenolic resins, phenolic resins, urethane resins, polyisocyanate resins, polyisocyanurate resins, and polyimide resins.

The surface-modified member may be formed by resin shaping. Examples of the resin shaping include injection shaping and press shaping.

With respect to the resin member, thermoplastic resin, heat-curable resin, surface-modifying sheet, surface-modifying layer, and surface-modified member, the explanations given above can be used as such.

The coating film is not particularly limited. Examples thereof include various coating films including acrylic-based, urethane-based, epoxy-based, fluorochemical-based, silicone-based, polyester/melamine-based, alkyd/melamine-based, acrylic/melamine-based, acrylic/urethane-based, and acrylic/polyacidic-hardener-based coating films.

Coating methods for forming the coating film are not particularly limited, and use can be made of common methods including brushing, roller coating, spray coating, and coating by various coaters. The amount in which the coating fluid is to be applied is not particularly limited. The time period, temperature, etc. in heating the coating film can be suitably decided in accordance with the coating fluid to be used, application amount, etc.

[Method for producing coated article according to second embodiment]

A method for producing a coated article according to a second embodiment of the present invention is a method for producing a coated article including: a surface-modified member in which the surface-modifying layer according to the embodiment of the present invention is laminated to a resin member; and a coating film provided to at least a part of the surface-modified member. The resin included in the resin member is a thermoplastic resin having a melting point of $T_1$°C, and this method includes: a step in which the surface-modifying layer is disposed on at least a part of a surface of the resin member and heat welding is conducted at a temperature of $(T_1-50)$°C or higher, thereby forming a surface-modified member; and a step in which a coating film is formed on the surface-modified member on the side where the surface-modifying layer is present.

In the method for producing a coated article according to the second embodiment of the present invention, high bonding strength is obtained and, preferably, surface treatment steps which have been conducted hitherto can be omitted. In one embodiment of the method for producing a coated article according to the second embodiment of the present invention, a surface treatment is conducted simultaneously with shaping and this makes the use of a release agent unnecessary and enables release-agent removal steps (e.g., sandblasting and degreasing) to be omitted.

In the method for producing a coated article according to the second embodiment of the present invention, the surface-modifying layer is disposed on at least a part of a surface of a resin member (thermoplastic resin member) including a thermoplastic resin having a melting point of $T_1$°C and heat welding is conducted at a temperature of $(T_1-50)$°C or higher. By performing a surface treatment of the thermoplastic resin member by such method, sufficient bonding strength can be imparted to the thermoplastic resin member and, preferably, this impartation can be attained with high production efficiency and at low cost.

The temperature for the heat welding is preferably $(T_1-50)$°C to $(T_1+150)$°C, more preferably $(T_1-25)$°C to $(T_1+100)$°C, still more preferably $(T_1-10)$°C to $(T_1+75)$°C, especially preferably $(T_1)$°C to $(T_1+50)$°C. By performing a surface treatment of the thermoplastic resin member by such method at a heat welding temperature within that range, boundary portions of the surface-modifying layer and thermoplastic resin member are brought into contact with each other in a molten state, resulting in welding and mixing. Hence, sufficient bonding strength can be imparted to the thermoplastic resin member. Preferably, this impartation can be attained with high production efficiency and at low cost.

Examples of the thermoplastic resin included in the resin member according to the embodiment of the present invention include PP (polypropylene), PA (polyamides), PPE (poly(phenylene ether)s), PPS (poly(phenylene sulfide)), PET (poly(ethylene terephthalate)), PBT (poly(butylene terephthalate)), POM (polyacetals), PEEK (polyetheretherketones), and PC (polycarbonates). Examples of these thermoplastic resins, which enable the effects of the present invention to be advantageously exhibited include PPS (poly(phenylene sulfide)s), PA (polyamides), and PP (polypropylene).

As the thermoplastic resin, a fiber-reinforced thermoplastic resin (FRTR) can be employed.

Examples of the fiber-reinforced thermoplastic resin (FRTR) include carbon-fiber-reinforced thermoplastic resins (CFRTPs) and glass-fiber-reinforced thermoplastic resins (GFRTPs).

Examples of the carbon-fiber-reinforced thermoplastic resins (CFRTPs) include carbon-fiber-reinforced PPS-based thermoplastic resins, carbon-fiber-reinforced PA-based thermoplastic resins, and carbon-fiber-reinforced PP-based thermoplastic resins.

Examples of the glass-fiber-reinforced thermoplastic resins (GFRTPs) include glass-fiber-reinforced PPS-based thermoplastic resins, glass-fiber-reinforced PA-based thermoplastic resins, and glass-fiber-reinforced PP-based thermoplastic resins.

With respect to the surface-modifying layer, the explanation given above can be used as such.

With respect to the coating film and coating methods for forming the coating film, the explanations given in the section [Method for producing coated article according to first embodiment] can be used as such.

[Method for producing coated article according to third embodiment]

A method for producing a coated article according to a third embodiment of the present invention is a method for producing a coated article including: a surface-modified member in which the surface-modifying layer according to the embodiment of the present invention is laminated to a resin member; and a coating film provided to at least a part of the surface-modified member. The resin included in the resin member is a heat-curable resin having a curing temperature of $T_2$°C, and this method includes: a step in which the surface-modifying layer is disposed on at least a part of a surface of the resin member and heat-shaping is conducted at a temperature of $T_2$°C or higher, thereby forming a surface-modified member; and a step in which a coating film is formed on the surface-modified member on the surface-modifying-layer side.

In the method for producing a coated article according to the third embodiment of the present invention, high bonding strength is obtained and, preferably, surface treatment steps which have been conducted hitherto can be omitted. In one embodiment of the method for producing a coated article according to the third embodiment of the present invention, a surface treatment is conducted simultaneously with shaping and this makes the use of a release agent unnecessary and enables release-agent removal steps (e.g., sandblasting and degreasing) to be omitted.

In the method for producing a coated article according to the third embodiment of the present invention, the surface-modifying layer is disposed on at least a part of a surface of a resin member (heat-curable resin member) including a heat-curable resin having a curing temperature of $T_2$°C and heat-shaping is conducted at a temperature of $T_2$°C or higher. By performing a surface treatment of the heat-curable resin member by such method, sufficient bonding strength can be imparted to the heat-curable resin member and, preferably, this impartation can be attained with high production efficiency and at low cost.

The temperature for the heat-shaping is preferably ($T_2$-50)°C to ($T_2$+50)°C, more preferably ($T_2$-40)°C to ($T_2$+40)°C, still more preferably ($T_2$-30)°C to ($T_2$+30)°C, especially preferably ($T_2$-20)°C to ($T_2$+20)°C. By performing a surface treatment of the heat-curable resin member by such method at a heat-shaping temperature within that range, boundary portions of the surface-modifying layer and heat-curable resin member are softened by the heating and are mixed or chemically bonded. Hence, sufficient bonding strength can be imparted to the heat-curable resin member. Preferably, this impartation can be attained with high production efficiency and at low cost.

Examples of the heat-curable resin included in the resin member according to the embodiment of the present invention include unsaturated polyester resins, vinyl ester resins, epoxy resins, melamine resins, phenolic resins, urethane resins, polyisocyanate resins, polyisocyanurate resins, and polyimide resins.

The heat-curable resin may be a fiber-reinforced heat-curable resin.

Examples of the fiber-reinforced heat-curable resin include carbon-fiber-reinforced curable plastic resins and glass-fiber-reinforced heat-curable resins.

The expressions "at least a part of a surface of a thermoplastic resin member" and "at least a part of a surface of a heat-curable resin member" mean at least a part of all the surfaces of the thermoplastic resin member or heat-curable resin member. For example, in the case where the thermoplastic resin member or the heat-curable resin member has a plate shape, sheet shape, or film shape, the expressions mean, for example, some of at least one surface thereof or all of at least one surface thereof.

Examples of the shape of the thermoplastic resin member or heat-curable resin member include a plate shape having flat surfaces, a plate shape having curved surfaces, a sheet shape, and a film shape.

The thicknesses of the thermoplastic resin member and heat-curable resin member are, for example, 0.001-10 mm.

Examples of methods for disposing a surface-modifying layer on at least a part of a surface of a thermoplastic resin member or heat-curable resin member in the method for producing a coated article according to the second embodiment of the present invention or in the method for producing a coated article according to the third embodiment include: a method in which a solution including a material for the surface-modifying layer and a solvent is applied to at least a part of a surface of the thermoplastic resin member or heat-curable resin member; a method in which a surface-modifying layer is disposed by melt extrusion on at least a part of a surface of the thermoplastic resin member or heat-curable resin member; and a method in which a sheet-form surface-modifying layer is laminated to at least a part of a surface of the thermoplastic resin member or heat-curable resin member.

Examples of methods for the application of the solution including a material for the surface-modifying layer and a solvent according to the embodiments of the present invention include: a method in which the thermoplastic resin member or heat-curable resin member is dipped in the solution including a material for the surface-modifying layer and a solvent; a method in which the solution including a material for the surface-modifying layer and a solvent is applied with a brush to at least a part of a surface of the thermoplastic resin member or heat-curable resin member; a method in which the solution including a material for the surface-modifying layer and a solvent is applied with any of various coaters to at least a part of a surface of the thermoplastic resin member or heat-curable resin member; and a method in which the solution including a material for the surface-modifying layer and a solvent is applied by spraying to at least a part of a surface of the thermoplastic resin member or heat-curable resin member.

Examples of the solution including a material for the surface-modifying layer and a solvent include a surface-modifying composition obtained by dissolving the material for the surface-modifying layer in any desired appropriate solvent to such a degree that the effects of the invention are not lessened.

With respect to the surface-modifying layer and the surface-modifying composition, the explanations given above can be used as such.

In cases when the solution including a material for the surface-modifying layer and a solvent has been applied to at least a part of a surface of a thermoplastic resin member or heat-curable resin member, at least a part of the solvent is then removed by drying. This drying is only required to remove at least a part of the solvent. However, preferably 50 mass% or more of the solvent is removed, more preferably 80 mass% or more of the solvent is removed, still more preferably 90 mass% or more of the solvent is removed, especially preferably 95 mass% or more of the solvent is removed, and most preferably all of the solvent is removed.

For the drying, any desired appropriate method capable of removing the solvent, such as oven heating, infrared heating, or high-frequency heating, can be employed unless the effects of the invention are lessened thereby. Any desired appropriate drying temperature can be used in accordance with the boiling point of the solvent to be used.

Examples of methods for disposing a surface-modifying layer by melt extrusion include a method in which a material for the surface-modifying layer is melt-extruded with a melting extruder or the like and disposed on at least a part of a surface of the thermoplastic resin member or heat-curable resin member.

Examples of methods for laminating a sheet-form surface-modifying layer include a method in which a surface-modifying sheet (laminate including a release sheet and a surface-modifying layer), such as that described in the section "Method for producing surface-modified member" according to the embodiment of the present invention, is laminated to at least a part of a surface of the thermoplastic resin member or heat-curable resin member so that the surface-modifying layer of the surface-modifying sheet faces the resin member.

Examples of methods for the heat-shaping include oven heating, infrared heating, high-frequency heating, and heat pressing. Heat pressing is preferred.

The period of the heat-shaping is preferably 1 second to 2 hours.

By the method for producing a coated article according to the second embodiment of the present invention or by the method for producing a coated article according to the third embodiment, a surface-modifying layer is disposed on a surface of a thermoplastic resin member or heat-curable resin member to obtain a surface-modified member (sometimes called a multilayer member, which includes the thermoplastic resin member or heat-curable resin member, and the surface-modifying layer), and a coating film is formed on the surface-modified member on the side where the surface-modifying layer is present. Thus, a coated article is obtained. Preferably, a mixture layer that the thermoplastic resin member or heat-curable resin member, and the surface-modifying layer is mixed, is provided between the thermoplastic resin member or heat-curable resin member and the surface-modifying layer. The thickness of this mixture layer is preferably 1.5 nm or larger, more preferably 2.0 nm or larger.

The thickness of the surface-modifying layer is preferably 0.1-2,000 $\mu$m, more preferably 1-1,000 $\mu$m, still more preferably 3-200 $\mu$m, especially preferably 5-30 $\mu$m.

With respect to the coating film and methods for forming the coating film, the explanations given in the section [Method for producing coated article according to first embodiment] can be used as such.

[Method for producing coated article according to fourth embodiment]

A method for producing a coated article according to a fourth embodiment of the present invention is a method for producing a coated article including: a surface-modified member in which a surface-modifying layer is laminated to a resin member; and a coating film formed on the surface-modified member on the side where the surface-modifying layer is present.

In the method for producing a coated article according to the fourth embodiment of the present invention, after at least a part of a surface of a resin member is brought into a molten state or softened state, a surface-modifying layer is disposed on the molten-state or softened-state surface of the resin member. By performing a surface treatment of a resin member by such method, sufficient bonding strength can be imparted to the resin member and, preferably, this impartation ca be attained with high production efficiency and at low cost.

In the method for producing a coated article according to the fourth embodiment of the present invention, at least a part of a surface of a resin member is brought into a molten state or softened state and a surface-modifying layer is disposed on the surface.

With respect to the expression "at least a part of a surface of a resin member", the explanation given in the section [Method for producing coated article according to first embodiment] can be used as such.

With respect to the resin member, the explanation given in the section [Method for producing coated article according to first embodiment] can be used as such.

The term "molten state" means that at least a part of the surface of the resin member is in a molten state, and this can be attained preferably by heating the resin member to a temperature of its melting point of more.

The term "softened state" means that at least a part of the surface of the resin member is in a softened state, and this can be attained preferably by heating the resin member to a temperature of its softening temperature or more.

In the method for producing the coated article according to the fourth embodiment of the present invention, at least a part of a surface of the resin member is brought into the molten state or softened state before the surface-modifying layer is disposed on the molten-state or softened-state surface of the resin member. By disposing the surface-modifying layer on the molten-state or softened-state surface of the resin member, the surface-modifying layer is welded and mixed by the heat of the surface of the resin member and sufficient bonding strength can be imparted to the resin member. Preferably, this impartation can be attained with high production efficiency and at low cost.

With respect to the surface-modifying layer, coating film, and coating methods for forming the coating film, the explanations given in the section [Method for producing coated article according to first embodiment] can be used as such.

Examples of methods for disposing the surface-modifying layer on the molten-state or softened-state surface of the resin member in the method for producing the coated article according to the fourth embodiment of the present invention include a method in which the surface-modifying sheet is the laminate of the release sheet and the surface-modifying layer, and which the surface-modifying sheet on the surface-modifying-layer side is placed on the molten-state or softened-state surface of the resin member. By the above method, more sufficient bonding strength can be imparted to the resin member and, preferably, this impartation can be attained with high production efficiency and at low cost.

[Process control method]

In the production of a surface-modifying sheet, a surface-modified member, and a coated article according to embodiments of the present invention, the surface-modifying layer can be rendered visible, for example, by incorporating an additive, such as a dye, a pigment, or a crystalline substance, into a surface-modifying composition or into the surface-modifying layer, making the production steps easy to control.

With respect to the surface-modifying composition, surface-modifying sheet, coated article, and additive, the explanations given above can be used as such.

Examples of methods for process control include a method in which a portion colored by a surface treatment is discriminated by visually ascertaining it or by examining an image thereof captured with a camera.

Examples

The present invention is specifically described below by reference to examples, but the present invention is not limited to those examples in any way.

<Storage modulus>

The surface-modifying sheets produced in the Examples and Comparative Examples were each examined for storage modulus in the following manner.

Surface-modifying layers from which the release sheets had been removed were stacked in a thickness of about 500 μm, and this laminate was used as a test sample. The laminate was cut to produce a test piece having a diameter of 25 mm. A jig having a diameter of 25 mm was used to perform a temperature-dispersion examination at 25 to 300°C with viscoelastometer ARES-G2, manufactured by TA Instruments Inc. This examination was conducted at a heating rate of 5 °C/min and a frequency of 1 Hz. The value of modulus measured at 160°C was taken as the storage modulus (Pa).

<Surface tension>

The surface tension (m)N/m of each surface-modifying layer was measured by the wetting tension test method (JIS K6768-1999). Several drops of a mixture solution for wetting tension test which had been regulated so as to have an appropriate surface tension were dropped onto the surface-modifying layer of a surface-modified resin member and spread with a cotton swab. In cases when the applied mixture solution for wetting tension test retained the applied state for 2 seconds or longer without breaking, this surface-modifying layer was deemed to be wet. For the mixture solution for wetting tension test, used was the one manufactured by FUJIFILM Wako Pure Chemical Corp.

<Thickness of coating film>

The thickness of a coating film was determined with a dial gauge (GC-9, manufactured by Peacock). The coated article and the surface-modified resin member on which the coating film had not been formed were examined for thickness, and the difference therebetween was regarded as the thickness ($\mu$m) of the coating film. The average thickness ($\mu$m) is an average of measured values for ten points.

<60° glossiness>

60° glossiness at room temperature (25°C) was measured by a measurement of specular gloss (JIS Z8741-1997). A glossmeter (micro-tri-gloss) manufactured by BYK GmbH was placed on a surface of a coated article to measure the glossiness of the coating film. The average glossiness is an average of measured values for five points.

The coated article was held for 24 hours in a thermo-hygrostatic chamber set in an environment of a temperature of 85°C and a humidity of 85% RH and was then examined for 60° gloss.

A decrease in 60° glossiness was calculated from the 60° glossiness at room temperature (25°C) above and the 60° glossiness measured after 24-hour holding in the environment having the temperature of 85°C and the humidity of 85% RH, using the following equation.

$$\text{Decrease in glossiness (\%)}$$
$$= \{[(\text{glossiness } (25°C)) - (\text{glossiness } (85°C/85\% \text{ RH}))]/(\text{glossiness } 25°C))\} \times 100$$

In cases when the decrease in 60°C glossiness was 5% or less, it was deemed that the coating film was able to be inhibited from changing in appearance.

<Thickness of surface-modifying layer>

The thickness of a surface-modifying layer was determined with a dial gauge (GC-9, manufactured by Peacock). The thickness of the surface-modifying sheet was measured. The surface-modifying layer in the portion where the thickness measurement was made was removed, and the thickness ($\mu$m) of the release sheet in that portion was measured. The difference therebetween was taken as the thickness ($\mu$m) of the surface-modifying layer. The average thickness ($\mu$m) is an average of measured values for ten points.

<Coating adhesion>

The coated articles produced in the Examples and Comparative Examples were each evaluated for crosscut adhesion by the crosscut method described in JIS K5600-5-6, and the number of peeled coating-film squares was counted. In cases when the number of peeled coating-film squares among the hundred squares was 0, the coating was deemed to have satisfactory adhesion.

- Cutting interval: 2 mm
- Number of squares formed by crosscutting: 100
- Peeling tape: (Nichiban) Cellophane Tape (registered trademark); 24-mm wide

[Example 1]

(Surface-modifying sheet (1))

A hundred parts by mass of a copolyamide resin (Amilan CM8000, manufactured by Toray Industries, Inc.) and 1 part by mass of a polyfunctional epoxy resin (TETRAD-C, manufactured by Mitsubishi Gas Chemical Co., Ltd.) were dissolved in a 40°C solvent mixed with ethanol (EtOH)/water/isopropyl alcohol (IPA) = 68 mass%/12 mass%/20 mass% to produce a solution (surface-modifying composition) having a solid content of 20 mass%.

The produced surface-modifying composition was filtered with a nylon sieve having an opening size of 188 $\mu$m and then applied to a release sheet (Nitoflon 900 UL, manufactured by Nitto Denko Corp.; fluororesin sheet film [polytetrafluoroethylene (PTFE) (thickness, 0.05 mm; dimensions, 250 mm (width) $\times$ 450 mm (length))] with an applicator. The applied composition was dried in a thermostatic drying oven at 100°C for 2 minutes to produce a surface-modifying sheet (1) including the release sheet and a surface-modifying layer.

(Surface-modified member (1))

The surface-modifying sheet (1) produced above was stacked on a carbon-fiber-reinforced heat-curable epoxy resin prepreg (Torayca, manufactured by Toray Industries, Inc.) (dimensions, 150 mm (width) $\times$ 120 mm (length) $\times$ 1 mm (thickness)), and the stacked one was heated and welded by pressing (150°C, 5 minutes) to produce a surface-modified member (1).

(Coated article (1))

The release sheet of the surface-modified member (1) produced above was peeled off, and V-Top H (two-pack type curable urethane coating material), manufactured by Dai Nippon Toryo Co., Ltd., was applied to the surface-modifying layer with an applicator. The coating film was cured at ordinary temperature for 3 days or more to produce a coated article (1).

[Examples 2 to 22, Comparative Examples 1 to 4]

Surface-modifying sheets, surface-modified members, and coated articles were produced in the same manners as in Example 1, except that the materials used for the surface-modifying composition and the use amounts thereof were changed as shown in Tables 1 to 3 and the thickness of the coating film was changed as shown in Tables 1 to 3.

[Example 23]

(Surface-modifying sheet (23))

A hundred parts by mass of a copolyamide resin (Amilan CM8000, manufactured by Toray Industries, Inc.) and 12.5 parts by mass of untreated fumed silica (M5 Cab-o-sil, manufactured by CABOT Corp.) were dispersed or dissolved in a 40°C solvent mixed with ethanol (EtOH)/water/isopropyl alcohol (IPA) = 68 mass%/12 mass%/20 mass% to produce a solution (surface-modifying composition) having a solid content of 20 mass%.

The produced surface-modifying composition was filtered with a nylon sieve having an opening size of 188 $\mu$m and then applied to a release sheet (Nitoflon 900 UL, manufactured by Nitto Denko Corp.; fluororesin sheet film [polytetrafluoroethylene (PTFE) (thickness, 0.05 mm; dimensions, 250 mm (width) $\times$ 450 mm (length))] with an applicator. The applied composition was dried in a thermostatic drying oven at 100°C for 2 minutes to produce a surface-modifying sheet including the release sheet and a 20-$\mu$m surface-modifying layer disposed thereon.

Two surface-modifying sheets thus produced were superposed so that the surface-modifying layers faced each other, and laminated to each other with heating at 150°C to obtain a multilayer surface-modifying-sheet object. One of the release sheets of the laminate was peeled off, and a surface-modifying sheet produced separately was superposed on that laminate so that the surface-modifying layer of the surface-modifying sheet faced the exposed surface-modifying layer of the laminate. This stack was subjected to thermal laminating at 150°C. This step was repeated several times until the surface-modifying-layer thickness reached 200 $\mu$m , thereby obtaining a surface-modifying sheet (23).

A surface-modified member and a coated article were produced in the same manners as in Example 1, except that the surface-modifying sheet was replaced by the surface-modifying sheet (23) and the thickness of the coating film was changed as shown in Table 2.

[Example 24]

A surface-modifying sheet, a surface-modified member, and a coated article were produced in the same manners as in Example 23, except that the surface-modifying sheet was produced so as to have a surface-modifying-layer thickness of 1,000 $\mu$m.

[Example 25]

(Surface-modified member (25))

A surface-modifying sheet produced in the same manner as in Example 5 was superposed on a carbon-fiber-reinforced thermoplastic poly(phenylene sulfide) resin (carbon-fiber-reinforced thermoplastic poly(phenylene sulfide) resin manufactured by Bond Laminates) (dimensions, 150 mm (width) $\times$ 120 mm (length) $\times$ 1 mm (thickness)), and the stack was heated and welded by pressing (300°C, 1 minute) to produce a surface-modified member (25).

A coated article was produced in the same manner as in Example 1, except that the surface-modified member was replaced by the surface-modified member (25) and the thickness of the coating film was changed as shown in Table 2.

[Comparative Example 5]

A surface-modified member and a coated article were produced in the same manners as in Example 1, except that the release sheet on which no surface-modifying layer had been disposed was used in place of the surface-modifying sheet.

[Comparative Example 6]

A surface-modified member and a coated article were produced in the same manners as in Example 25, except that a surface-modifying sheet produced in the same manner as in Comparative Example 1 was used.

[Comparative Example 7]

A surface-modified member and a coated article were produced in the same manners as in Example 25, except that the release sheet on which no surface-modifying layer had been disposed was used in place of the surface-modifying sheet.

[Comparative Example 8]

A surface-modifying sheet, a surface-modified member, and a coated article were produced in the same manners as in Example 23, except that the addition of 12.5 parts by mass of untreated fumed silica (M5 Cab-o-sil, manufactured by CABOT Corp.) was omitted.

The following Tables 1 to 3 show the Examples and Comparative Examples.

[Table 1]

Table 1

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Polymer | | CM8000 (copolymer nylon) | 100 | 100 | 100 | 100 | 100 | 100 | 100 | 100 | 100 | 100 | 100 | 100 | 100 |
| | | TETRAD-C (polyfunctional epoxy) | 1 | 3 | | | | | | | | | | | |
| | | NYPER BMT-K40 (benzoyl peroxide) | | | 0.3 | | | | | | | | | | |
| | | UC-3510 (acrylic oligomer) | | | | 2 | | 2 | | 2 | | | | | |
| | Fine particles | M5 (unmodified fumed silica) | | | | to | 20 | | | | | | | | |
| | | TS720 (PDMS-modified fumed silica) | | | | | | 10 | 20 | 30 | | | | | |
| | | AEROSIL50 (untreated fumed silica) | | | | | | | | | | 10 | | | |
| | | AEROSIL300 (untreated fumed silica) | | | | | | | | | | | 10 | | |
| | | E-1011 (surfactant-treated wet-process silica) | | | | | | | | | | | 15 | | |

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Surface-modifying layer | | AZ-204 (untreated wet-process silica) | | | | | | | | | | | | 15 | |
| | | SP-200 (untreated wet-process silica) | | | | | | | | | | | | | 15 |
| | | Average primary-particle diameter (nm) | | | | 12 | 12 | 12 | 12 | 12 | 30 | 7 | 20 | 10 | 15 |
| | Production method | | coating | coating | coating | coating | coating | coating | coating | coating | coating | coating | coating | coating | coating |
| | Solid content | (mass%) | 20% | 20% | 20% | 20% | 20% | 20% | 20% | 20% | 20% | 20% | 20% | 20% | 20% |
| | Solvent | EtOH/water/IPA (mass%) | 68/12/20 | 68/12/20 | 68/12/20 | 68/12/20 | 68/12/20 | 68/12/20 | 68/12/20 | 68/12/20 | 68/12/20 | 68/12/20 | 68/ 12/20 | 68/12/20 | 68/12/20 |
| | Thickness | μm | 10 | 10 | 10 | 10 | to | 10 | 10 | 10 | 10 | 10 | 10 | 10 | 10 |
| | Storage modulus | kPa | 69 | 87 | 5.9 | 19 | 41 | 8.5 | 78 | 200 | 16 | 70 | 112 | 112 | 62 |

(to be continued)

| | | | | | | | | | | | | | | | |
|---|---|---|---|---|---|---|---|---|---|---|---|---|---|---|---|
| Release sheet | Kind | | cut PTFE | cut PTFE | cut PTFE | cut PTFE | cut PTFE | cut PTFE | cut PTFE | cut PTFE | cut PTFE | cut PTFE | cut PTFE | cut PTFE | cut PTFE |
| | Product No. | | No. 900UL | No. 900UL | No. 900UL | No. 900UL | No. 900UL | No. 900UL | No. 900UL | No. 900UL | No. 900UL | No. 900UL | No. 900UL | No. 900UL | No. 900UL |
| | Thickness | μm | 50 | 50 | 50 | 50 | 50 | 50 | 50 | 50 | 50 | 50 | 50 | 50 | 50 |

(continued)

| Production method | Resin member | | CF-EpTS | CF-EpTS | CF-EpTS | CF-EpTS | CF-EpTS | CF-EpTS | CF-EpTS | CF-EpTS | CF-EpTS | CF-EpTS | CF-EpTS | CF-EpTS | CF-EpTS |
|---|---|---|---|---|---|---|---|---|---|---|---|---|---|---|
| | | | Example 1 | Example 2 | Example 3 | Example 4 | Example 5 | Example 6 | Example 7 | Example 8 | Example 9 | Example 10 | Example 11 | Example 12 | Example 13 |
| | Molding method | | press molding | press molding | press molding | press molding | press molding | press molding | press molding | press molding | press molding | press molding | press molding | press molding | press molding |
| | Molding temperature (T°C) | | 150°C | 150°C | 150°C | 150°C | 150°C | 150°C | 150°C | 150°C | 150°C | 150°C | 150°C | 150°C | 150°C |
| Appearance of coating film | Thickness of coating film | μm | 45.0 | 51.0 | 73.6 | 38.8 | 38.8 | 27.6 | 39.0 | 40.0 | 50.0 | 50.0 | 50.0 | 50.0 | 50.0 |
| | 60° glossiness | (25°C) | 88.8 | 88.2 | 87.8 | 88.9 | 88.3 | 88.2 | 88.7 | 89.3 | 88.2 | 87.5 | 81.1 | 82.4 | 86.1 |
| | 60° glossiness | (after 85°C/85% introduction) | 84.7 | 85.7 | 84.9 | 87.9 | 88.0 | 87.9 | 88.3 | 89.0 | 88.3 | 87.6 | 78.6 | 79.2 | 84.1 |
| | Decrease in 60° glossiness | % | 4.7 | 2.9 | 3.3 | 1.1 | 0.3 | 0.3 | 0.5 | 0.3 | -0.1 | -0.1 | 3.1 | 3.9 | 2.3 |
| Adhesion | Surface tension | mN/m | 41 | 38 | >56 | 48 | >56 | >56 | >56 | >56 | >56 | >56 | >56 | >56 | >56 |
| | Coating adhesion | Number of peeled squares (of 100 squares) | 0 | 0 | 0 | 0 | 0 | 0 | 0 | 0 | 0 | 0 | 0 | 0 | 0 |

[Table 2]

Table 2

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| Surface-modifying layer | Polymer | CM8000 (co-polymer ny-lon) | 100 | 100 | 100 | 100 | 100 | 100 | 100 | 100 | 100 | 100 | 100 | 100 |
| | | UC-3510 (acrylic oligomer) | | | | | | | | | 2 | | | |
| | Fine particles | M5 (unmodi-fied fumed sil-ica) | | | | | | | | | 10 | 12.5 | 12.5 | 20 |
| | | ST-OS (un-treated colloi-dal silica) | 50 | | | | | | | | | | | |
| | | ST-O (un-treated colloi-dal silica) | | 50 | | | | | | | | | | |
| | | ST-O-40 (un-treated colloi-dal silica) | | | 30 | 70 | 100 | | | | | | | |
| | | ST-OUP (un-treated colloi-dal silica) | | | | | | 20 | | | | | | |
| | | Average pri-mary-particle diameter (nm) | 9 | 12 | 22 | 22 | 22 | 12 | | | 12 | 12 | 12 | 12 |
| | Platy filler | Sumecton-SEN (organ-ic-synthesis hectorite) | | | | | | | 10 | | | | | |

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| | Fibrous filler | Celloxane SCC (surface-treated CNF) | | | | | | | | 10 | | | | |
| | Production method | | coating | coating | coating | coating | coating | coating | coating | coating | coating | stack of coatings | stack of coatings | coating |
| | Solid content | (mass%) | 20% | 20% | 20% | 20% | 20% | 20% | 20% | 20% | 20% | 20% | 20% | 20% |
| | Solvent | EtOH/water/IPA (mass%) | 68/12/20 | 68/12/20 | 68/12/20 | 68/12/20 | 68/12/20 | 68/12/20 | 68/12/20 | 68/12/20 | 68/12/20 | 68/12/20 | 68/12/20 | 68/12/20 |
| | Thickness | μm | 10 | 10 | 10 | 10 | 10 | 10 | 10 | 10 | 50 | 200 | 1000 | 10 |
| | Storage modulus | kPa | 37 | 81 | 7.7 | 13 | 165 | 11 | 6.9 | 17 | 19 | 17 | 17 | 41 |
| Release sheet | Kind | | cut PTFE | cut PTFE | cut PTFE | cut PTFE | cut PTFE | cut PTFE | cut PTFE | cut PTFE | cut PTFE | cut PTFE | cut PTFE | cut PTFE |
| | Product No. | | No. 900UL | No. 900UL | No. 900UL | No. 900UL | No. 900UL | No. 900UL | No. 900UL | No. 90OUL | No. 900UL | No. 900UL | No. 900UL | No. 900UL |
| | Thickness | μm | 50 | 50 | 50 | 50 | 50 | 50 | 50 | 50 | 50 | 50 | 50 | 50 |
| Production method | Resin member | | CF-EpTS | CF-EpTS | CF-EpTS | CF-EpTS | CF-EpTS | CF-EpTS | CF-EpTS | CF-EpTS | CF-EpTS | CF-EpTS | CF-EpTS | CF-PPS |
| | Molding method | | press molding | press molding | press molding | press molding | press molding | press molding | press molding | press molding | press molding | press molding | press molding | press molding |
| | Molding temperature (T°C) | | 150°C | 150°C | 150°C | 150°C | 150°C | 150°C | 150°C | 150°C | 150°C | 150°C | 150°C | 300°C |

EP 4 286 154 A1

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| Appearance of coating film | Thickness of coating film | μm | 50.0 | 50.0 | 50.0 | 50.0 | 50.0 | 50.0 | 50.0 | 50.0 | 37.0 | 50.0 | 50.0 | 50.0 |
| | 60° glossiness | (25°C) | 88.0 | 88.0 | 87.7 | 88.2 | 88.6 | 88.5 | 87.8 | 88.2 | 88.2 | 87.9 | 88.6 | 88.6 |
| | 60° glossiness | (after 85°C/85% introduction) | 87.6 | 87.5 | 85.6 | 87.9 | 88.2 | 84.9 | 84.8 | 86.0 | 87.2 | 86.5 | 87.1 | 87.9 |
| | Decrease in 60° glossiness | % | 0.4 | 0.5 | 2.4 | 0.4 | 0.5 | 4.0 | 3.5 | 2.5 | 1.1 | 1.6 | 1.7 | 0.8 |
| Adhesion | Surface tension | mN/m | >56 | >56 | >56 | >56 | >56 | >56 | >56 | >56 | >56 | >56 | >56 | >56 |
| | Coating adhesion | Number of peeled squares (of 100 squares) | 0 | 0 | 0 | 0 | 0 | 0 | 0 | 0 | 0 | 0 | 0 | 0 |

EP 4 286 154 A1

[Table 3]

[Table 3]

Table 3

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Surface-modifying layer | Polymer | CM8000 (copolymer nylon) | 100 | 100 | | | | 100 | | 100 |
| | | FR105 (methoxymethyl-containing nylon-6) | | | 100 | | | | | |
| | | Polycaprolactam (crystallized PA6) | | | | 100 | | | | |
| | Production method | | coating | coating | coating | coating | | coating | | stack of coatings |
| | Solid content | (mass%) | 20% | 20% | 20% | 100% | - | 20% | - | 20% |
| | Solvent | EtOH/water/IPA ( mass%) | 68/12/20 | 68/12/20 | 60/10/30 | - | - | 68/12/20 | - | 68/12/20 |
| | Thickness | $\mu$m | 10 | 10 | 10 | 100 | - | 10 | - | 200 |
| | Storage modulus | kPa | 2.5 | 2.4 | 4.6 | 400,000 | - | 2.5 | - | 1.8 |
| Release sheet | Kind | | cut PTFE | cut PTFE | cut PTFE | cut PTFE | cut PTFE | cut PTFE | cut PTFE | cut PTFE |
| | Product No. | | No. 900UL | No. 900UL | No. 900UL | No. 900UL | No. 900UL | No. 900UL | No. 900UL | No. 900UL |
| | Thickness | $\mu$m | 50 | 50 | 50 | 50 | 50 | 50 | 50 | 50 |
| Production method | Resin member | | CF-EpTS | CF-EpTS | CF-EpTS | CF-EpTS | CF-EpTS | CF-PPS | CF-PPS | CF-EpTS |
| | Molding method | | press molding | press molding | press molding | press molding | press molding | press molding | press molding | press molding |
| | Molding temperature (T°C) | | 150°C | 150°C | 150°C | 150°C | 150°C | 300°C | 300°C | 150°C |

|  |  |  | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Appearance of coating film | Thickness of coating film | Mm | 23.4 | 50.0 | 29.0 | 53.5 | 41.0 | 50.0 | 50.0 | 50.0 |
|  | 60° glossiness | (25°C) | 85.8 | 88.3 | 86.3 | 89.4 | 88.3 | 86.7 | 88.4 | 83.4 |
|  | 60° glossiness | (after 85°C/85% introduction) | 48.5 | 83.2 | 54.2 | 89.6 | 88.1 | 67.6 | 87.7 | 70.3 |
|  | Decrease in 60° glossiness | % | 43.4 | 5.8 | 37.2 | -0.2 | 0.3 | 22.0 | 0.8 | 15.7 |
| Adhesion | Surface tension | mN/m | >56 | >56 | >56 | 35 | 32 | >56 | <30 | >56 |
|  | Coating adhesion | Number of peeled squares (of 100 squares) | 0 | 0 | 0 | 96 | 95 | 0 | 100 | 0 |

EP 4 286 154 A1

The materials shown in Tables 1 to 3 are as follows.

(Polymers)

CM8000: copolyamide resin (Amilan, manufactured by Toray Industries, Inc.)
TETRAD-C: polyfunctional epoxy resin (polyfunctional epoxy resin manufactured by Mitsubishi Gas Chemical Company, Inc.)
NYPER BMT-K40: benzoyl peroxide (NYPER series, manufactured by Nippon Oil & Fats Co., Ltd.)
UC-3510: acrylic polymer (ARUFON, manufactured by Toagosei Co., Ltd.)
FR105: methoxymethyl-group-containing nylon-6 (Fine Resin, manufactured by Namariichi Co., Ltd.)
Crystallized PA6: (polycarprolactam manufactured by Polysciences Inc.)

(Fine particles)

M5: untreated fumed silica (Cab-o-sil, manufactured by Cabot Corp.; average primary-particle diameter, 12 nm)
TS720: PDMS-treated fumed silica (Cab-o-sil, manufactured by Cabot Corp.; average primary-particle diameter, 12 nm)
AEROSIL 50: untreated fumed silica (AEROSIL, manufactured by Evonic Industries AG, average primary-particle diameter, 30 nm)
AEROSIL 300: untreated fumed silica (AEROSIL, manufactured by Evonic Industries AG, average primary-particle diameter, 7 nm)
E-1011: surfactant-treated wet-process silica (Nipsil, manufactured by Tosoh Corp.; average primary-particle diameter, 20 nm)
AZ-204: untreated wet-process silica (Nipsil, manufactured by Tosoh Corp.; average primary-particle diameter, 10 nm)
SP-200: untreated wet-process silica (Nipsil, manufactured by Tosoh Corp.; average primary-particle diameter, 15 nm)
ST-OS: untreated colloidal silica (Snowtex, manufactured by Nissan Chemical Industries, Ltd.; average primary-particle diameter, 9 nm)
ST-O: untreated colloidal silica (Snowtex, manufactured by Nissan Chemical Industries, Ltd.; average primary-particle diameter, 12 nm)
ST-O-40: untreated colloidal silica (Snowtex, manufactured by Nissan Chemical Industries, Ltd.; average primary-particle diameter, 22 nm)
ST-OUP: untreated chain-shaped colloidal silica (Snowtex, manufactured by Nissan Chemical Industries, Ltd.; average primary-particle diameter, 12 nm)

(Platy filler)

Sumecton SEN: organic-synthesis hectorite (manufactured by Kunimine Industries Co., Ltd.)

(Fibrous Filler)

Celloxane SCC: surface-treated cellulose nanofibers (manufactured by Sihs React Co., Ltd.)

(Resin members)

CF-EpTS: carbon-fiber-reinforced heat-curable epoxy resin prepreg (Torayca, manufactured by Toray Industries, Inc.)
CF-PPS: carbon-fiber-reinforced thermoplastic poly(phenylene sulfide) resin (Tepex, manufactured by Bond-Laminates GmbH)

INDUSTRIAL APPLICABILITY

The surface-modifying sheet according to the embodiment of the present invention can form a surface-modifying layer having excellent bonding strength, makes appearance changing decrease even in high-temperature high-humidity environments, and enables to integrally shape the surface-modifying layer and a resin member when forming a surface modified member.

While the invention has been described in detail and with reference to specific embodiments thereof, it will be apparent to one skilled in the art that various changes and modifications can be made therein without departing from the spirit and scope thereof.

This application is based on a Japanese patent application filed on January 29, 2021 (Application No. 2021-13342) and a Japanese patent application filed on September 29, 2021 (Application No. 2021-160127), the contents thereof being incorporated herein by reference.

REFERENCE SIGNS LIST

| | |
|---|---|
| 10 | Surface-modifying layer |
| 20 | Release sheet |
| 30 | Coating film |
| 100 | Resin member |
| 200 | Surface-modifying sheet |
| 300 | Coated article |
| 400 | Resin material |

**Claims**

1. A surface-modifying sheet comprising a release sheet and a surface-modifying layer,
   wherein the surface-modifying layer has a 160°C storage modulus of $5.0 \times 10^3$ to $1.0 \times 10^7$ Pa and the surface-modifying layer has a surface tension of 38 mN/m or higher.

2. The surface-modifying sheet according to claim 1, wherein

   the surface-modifying layer includes a polymeric component, and
   the polymeric component has a nonpolar unit and a polar unit.

3. The surface-modifying sheet according to claim 1 or 2, wherein
   the surface-modifying layer includes a filler.

4. The surface-modifying sheet according to any one of claims 1 to 3, wherein
   the surface-modifying layer has an average thickness of 0.1 $\mu$m to 2,000 $\mu$m.

5. A laminate comprising the surface-modifying layer of the surface-modifying sheet according to any one of claims 1 to 4, the surface-modifying layer being laminated to at least a part of a surface of a resin material.

6. The laminate according to claim 5, wherein
   the resin material is a prepreg.

7. A surface-modified member comprising the surface-modifying layer of the surface-modifying sheet according to any one of claims 1 to 4, the surface-modifying layer being laminated to at least a part of a surface of a resin member.

8. The surface-modified member according to claim 7, wherein
   the resin member includes a heat-curable resin.

9. The surface-modified member according to claim 7, wherein
   the resin member includes a heat-curable epoxy resin.

**10.** A coated article comprising a coating film provided to at least a part of the surface-modified member according to any one of claims 7 to 9.

**11.** The coated article according to claim 10, wherein
the coating film is at least a kind selected from a coating, a printed layer, a vapor-deposited layer, and a plating layer.

**12.** A method for producing a surface-modified member using the surface-modifying sheet according to any one of claims 1 to 4, the method comprising a laminating step of laminating the surface-modifying layer to a resin member by heat pressing.

**13.** The method for producing a surface-modified member according to claim 12, wherein the resin member includes a heat-curable epoxy resin.

**14.** A method for producing a coated article using the surface-modifying sheet according to any one of claims 1 to 4, the method comprising

a step of producing a surface-modified member by laminating the surface-modifying layer on a resin member by heat pressing and
a step of forming a coating film on the surface-modified member on a surface-modifying-layer side.

**15.** The method for producing a coated article according to claim 14, wherein the resin member includes a heat-curable epoxy resin.

FIG.1

FIG.2

FIG.3

FIG.4

## INTERNATIONAL SEARCH REPORT

| International application No. |
| --- |
| **PCT/JP2022/002299** |

**A. CLASSIFICATION OF SUBJECT MATTER**

*B32B 27/00*(2006.01)i; *B29C 63/02*(2006.01)i; *B29C 70/34*(2006.01)i; *B32B 5/28*(2006.01)i; *B32B 7/022*(2019.01)i; *C09J 7/00*(2018.01)i

FI: B32B27/00 B; B29C63/02; B29C70/34; B32B5/28 Z; B32B7/022; B32B27/00 E; B32B27/00 L; C09J7/00

According to International Patent Classification (IPC) or to both national classification and IPC

**B. FIELDS SEARCHED**

Minimum documentation searched (classification system followed by classification symbols)

B32B1/00-43/00; B29C63/02; B29C70/34; C09J1/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2017-160417 A (NITTO DENKO CORP) 14 September 2017 (2017-09-14)<br>  claims 1, 3-5, 7-8, 10, paragraphs [0024]-[0091], [0103]-[0113], fig. 1 | 1-15 |
| Y | JP 2006-282973 A (HITACHI CHEMICAL CO LTD) 19 October 2006 (2006-10-19)<br>  claims 1, 10, paragraphs [0010]-[0057], fig. 1 | 1-15 |
| Y | JP 60-141873 A (RISHO KOGYO KK) 26 July 1985 (1985-07-26)<br>  claims, column 2, lines 1-5, example 3, fig. 1 | 1-15 |
| A | JP 2015-193754 A (DAINIPPON PRINTING CO LTD) 05 November 2015 (2015-11-05)<br>  entire text | 1-15 |
| A | WO 2018/043490 A1 (MITSUBISHI CHEM CORP) 08 March 2018 (2018-03-08)<br>  entire text | 1-15 |
| A | JP 2001-205763 A (TEIJIN LTD) 31 July 2001 (2001-07-31)<br>  entire text | 1-15 |

☑ Further documents are listed in the continuation of Box C.      ☑ See patent family annex.

| \* | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **16 March 2022** | **29 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/002299** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 102746722 A (SHUN AN COATING TECHNOLOGY (KUNSHAN) CO., LTD.) 24 October 2012 (2012-10-24)<br>entire text | 1-15 |

Form PCT/ISA/210 (second sheet) (January 2015)

INTERNATIONAL SEARCH REPORT
Information on patent family members

International application No.

**PCT/JP2022/002299**

| Patent document cited in search report | | | Publication date (day/month/year) | Patent family member(s) | | | Publication date (day/month/year) |
|---|---|---|---|---|---|---|---|
| JP | 2017-160417 | A | 14 September 2017 | US 2017/0253773 A1 claims 1, 3-5, 7-8, 10, paragraphs [0018]-[0089], [0101]-[0112], fig. 1 CN 107151535 A | | | |
| JP | 2006-282973 | A | 19 October 2006 | US 2005/0255278 A1 claims 1, 10, paragraphs [0035]-[0095], fig. 1 KR 10-2006-0047674 A CN 1696233 A | | | |
| JP | 60-141873 | A | 26 July 1985 | (Family: none) | | | |
| JP | 2015-193754 | A | 05 November 2015 | (Family: none) | | | |
| WO | 2018/043490 | A1 | 08 March 2018 | US 2019/0185612 A1 whole document EP 3505552 A1 CN 109563239 A | | | |
| JP | 2001-205763 | A | 31 July 2001 | (Family: none) | | | |
| CN | 102746722 | A | 24 October 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017128722 A
- JP 2019194016 A
- JP 2020163831 A
- JP 2021013342 A
- JP 2021160127 A